# EUROPEAN PATENT APPLICATION

(11) **EP 4 678 393 A1**
(43) Date of publication of application: **14.01.2026**
(21) Application number: 24766995.5
(22) Date of filing: 28.02.2024
(51) Int. Cl.: B32B 15/09, B29C 45/14, B32B 7/12, B32B 15/095, B32B 27/00, B32B 27/36, B32B 27/40, C09J 11/06, C09J 175/06

(54) **METALLIC DECORATIVE LAMINATE AND URETHANE-BASED ADHESIVE AGENT**

(30) Priority: 03.03.2023 JP 2023033142
(71) Applicant: Wavelock Advanced Technology Co., Ltd, Tokyo 104-0044 (JP)
(72) Inventor: HOSHI, Kenta, Koga-shi, Ibaraki 306-0204 (JP)
(74) Representative: Müller-Boré & Partner Patentanwälte PartG mbB
(86) International application number: PCT/JP2024/007422
(87) International publication number: WO 2024/185624

(57) **Abstract**

There are provided a metallic decorative laminate including a first polycarbonate layer, a first adhesive layer, a metal-layer laminate including a metal layer, a second adhesive layer, and a second polycarbonate layer, in that order, the first adhesive layer and the second adhesive layer having a specific composition, a metallic formed body, an injection molded body, a method for manufacturing a metallic decorative laminate, a method for manufacturing a metallic formed body, a method for manufacturing an injection molded body, and a urethane-based adhesive, which can improve the poor appearance of a metallic molded article due to a washout without impairing the design property and moldability and which can satisfy hydrolysis resistance.

## Description

### Technical Field

The present invention relates to a metallic decorative laminate, a metallic formed body, an injection molded body, a method for manufacturing a metallic decorative laminate, a method for manufacturing a metallic formed body, a method for manufacturing an injection molded body, and a urethane-based adhesive.

### Background Art

In forming a resin molded body, a manufacturing method is known in which a metallic decorative laminate is inserted into a mold and molten resin is injected into the mold. Such a resin molded body manufactured by this manufacturing method can be provided with a luxurious metallic design simultaneously with molding. In addition, it can achieve process simplification, low cost, and weight reduction; thus, it is used for various applications, such as automotive interior and exterior components.

Examples of metallic decorative laminates used for such metallic molded bodies include laminates each having, in this order, a transparent or translucent surface film layer, an adhesive layer, a metal layer-retaining laminate layer having a metal layer on at least one side, an adhesive layer, and a base film layer (Patent Literature 1).

A metallic formed body that has a luxurious feel and vividness equivalent to that of glass is also known, which is produced by injection molding of a transparent polycarbonate resin onto the surface side of a metallic decorative laminate as an injection molding resin (Patent Literature 2). In this way, the use of a polycarbonate resin can achieve both weight reduction and safety in the event of a collision, compared to the case of using glass.

### Citation List

### Patent Literature

PTL 1: Japanese Unexamined Patent Application Publication No. 2004-001243
PTL 2: Japanese Unexamined Patent Application Publication No. 2022-048656

### Summary of Invention

### Technical Problem

The present invention aims to provide a metallic decorative laminate, a metallic formed body, an injection molded body, a method for manufacturing a metallic decorative laminate, a method for manufacturing a metallic formed body, a method for manufacturing an injection molded body, and a urethane-based adhesive, which can improve the poor appearance of a metallic molded article due to a washout without impairing a design property and moldability and which can satisfy hydrolysis resistance.

### Solution to Problem

The inventors have conducted intensive studies to solve the above problems and provide the following [1] to [7].
[1] A metallic decorative laminate includes a first polycarbonate layer, a first adhesive layer, a metal-layer laminate including a metal layer, a second adhesive layer, and a second polycarbonate layer, in that order, in which each of the first adhesive layer and the second adhesive layer contains a reaction product of a polyester-based diol, a polycarbonate-based diol, and an aliphatic isocyanate, a carbodiimide, and a silane coupling agent containing an epoxy group, and in which each of the first adhesive layer and the second adhesive layer contains a structure derived from the polyester-based diol in an amount of 13.80 parts or more by mass and 14.25 parts or less by mass, a structure derived from the polycarbonate-based diol in an amount of 0.75 parts or more by mass and 1.20 parts or less by mass, a structure derived from the aliphatic isocyanate in an amount of 3.20 parts or more by mass and 4.00 parts or less by mass, a structure derived from the carbodiimide in an amount of 0.08 parts or more by mass and 0.20 parts or less by mass, and a structure derived from the silane coupling agent in an amount of 0.50 parts or more by mass and 0.80 parts or less by mass.
[2] A metallic formed body includes a formed body of the metallic decorative laminate described in [1].
[3] An injection molded body includes an injection molded resin layer on a surface of the first polycarbonate layer and/or a surface of the second polycarbonate layer of the metallic formed body described in [2].
[4] A method for manufacturing a metallic decorative laminate described in [1] includes applying the urethane-based adhesive to the first polycarbonate layer and/or the metal-layer laminate, drying the urethane-based adhesive, and then bonding the first polycarbonate layer and the metal-layer laminate with the adhesive interposed therebetween, and applying the urethane-based adhesive to the metal-layer laminate and/or the second polycarbonate layer, drying the urethane-based adhesive, and then bonding the metal-layer laminate and the second polycarbonate layer.
[5] A method for manufacturing a metallic formed body includes a formation step of bringing the metallic decorative laminate described in [1], the metallic decorative laminate having a surface temperature of 150°C or higher and 200°C or lower, into close contact with a mold to thereby provide a formed body of a laminate including a metallic decoration.
[6] A method for manufacturing an injection molded body includes an injection molding step of, using an injection mold, injecting a resin into a gap between the injection mold and a surface of the first polycarbonate layer and/or a surface of the second polycarbonate layer of the metallic formed body obtained by the method for manufacturing a metallic formed body described in [5], to form a resin layer, thereby providing an injection molded body in which the metallic formed body and the resin layer are integrated.
[7] A urethane-based adhesive includes a polyester-based diol, a polycarbonate-based diol, an aliphatic isocyanate, a carbodiimide, and a silane coupling agent containing an epoxy group, in which the urethane-based adhesive contains a structure derived from the polyester-based diol in an amount of 13.80 parts or more by mass and 14.25 parts or less by mass, a structure derived from the polycarbonate-based diol in an amount of 0.75 parts or more by mass and 1.20 parts or less by mass, a structure derived from the aliphatic isocyanate in an amount of 3.20 parts or more by mass and 4.00 parts or less by mass, a structure derived from the carbodiimide in an amount of 0.08 parts or more by mass and 0.20 parts or less by mass, and a structure derived from the silane coupling agent in an amount of 0.50 parts or more by mass and 0.80 parts or less by mass.

### Advantageous Effects of Invention

According to the present invention, it is possible to provide a metallic decorative laminate, a metallic formed body, an injection molded body, a method for manufacturing a metallic decorative laminate, a method for manufacturing a metallic formed body, a method for manufacturing an injection molded body, and a urethane-based adhesive, which can improve the poor appearance of a metallic molded article due to a washout without impairing a design property and moldability and which can satisfy hydrolysis resistance.

### Brief Description of Drawings

[Fig. 1] Fig. 1 is a schematic section view of a metallic decorative laminate (A) according to an embodiment of the present invention.
[Fig. 2] Fig. 2 is a schematic section view of a metallic decorative laminate (B) according to an embodiment of the present invention.
[Fig. 3] (A) is a front view, and (B) and (C) are side views, each representing the dimensions of an injection molded body produced in an example.
[Fig. 4] (A) is a schematic view of an injection molded body with a washout, and (B) is a schematic view of an injection molded body free of a washout.

### Description of Embodiments

In conventionally known metallic molded articles described above, a polycarbonate resin identical to the injected resin has been used as the surface film layer of the metallic decorative laminate, because of the need to obtain adhesion with the injected resin. More specifically, the layer structure has included a transparent polycarbonate layer, an adhesive layer, a metal layer-holding laminate layer having a metal layer on at least one side thereof, an adhesive layer, and a base film layer, in this order.

However, when a polycarbonate resin is used, the molding temperature is as high as 300°C to 320°C. For this reason, in the case of conventional metallic decorative laminates, an uncured adhesive in a metallic decorative laminate melts (washes out) near an injection gate during injection molding, resulting in a poor appearance of the metallic molded article due to melting.

Metallic decorative laminates used for the interior and exterior of vehicles have been required to have high resistance to hydrolysis (hereinafter, referred to as hydrolysis resistance). Conventionally, a hydrolysis test has been performed to confirm whether such a metallic decorative laminate satisfies required characteristics, in which the metallic decorative laminate is left to stand for 10 days under conditions of a temperature of 50°C and a relative humidity of 95% RH. After the hydrolysis test, the adhesive layer in the metallic decorative laminate has been required to be free of any abnormality, such as peeling.

However, there is an increasing demand for metallic decorative laminates to have higher hydrolysis resistance. The hydrolysis test as a test for confirming that such required characteristics are satisfied also needs to be changed to a test in which a metallic decorative laminate is left to stand for 72 hours under the conditions of a temperature of 90°C and a relative humidity of 95% RH. It is required that no abnormality, such as peeling, of the adhesive layer of the metallic decorative laminate be observed before or after the hydrolysis test. When a conventional metallic decorative laminate is subjected to the hydrolysis test under the conditions, an adhesive layer between a surface film layer and a metal layer-holding laminate layer in the metallic decorative laminate layer undergoes hydrolysis and peels off, causing the laminate to fail to pass the hydrolysis test. As described above, the metallic decorative laminate is required to have higher hydrolysis resistance, and an improvement of the metallic decorative laminate has been required so that the metallic decorative laminate can pass even the new hydrolysis test as an index thereof.

As described below, it is possible to provide a metallic decorative laminate of the present disclosure which can improve the poor appearance of a metallic molded article due to a washout without impairing a design property and moldability and which satisfies hydrolysis resistance, because the metallic decorative laminate has a specific layer configuration and includes a first adhesive layer and a second adhesive layer each having a specific composition.

In addition, it is possible to provide an intermediate laminate, a multilayer laminate, a decorative laminate, and a metallic article, each including the metallic decorative laminate as a constituent element, and also provide a method for manufacturing the intermediate laminate and a method for manufacturing the decorative laminate.

The metallic decorative laminate, a metallic formed body, an injection molded body, a method for manufacturing a metallic decorative laminate, a method for manufacturing a metallic formed body, a method for manufacturing an injection molded body, and a urethane-based adhesive according to the present invention will be described below. However, the present invention is not limited to the following examples.

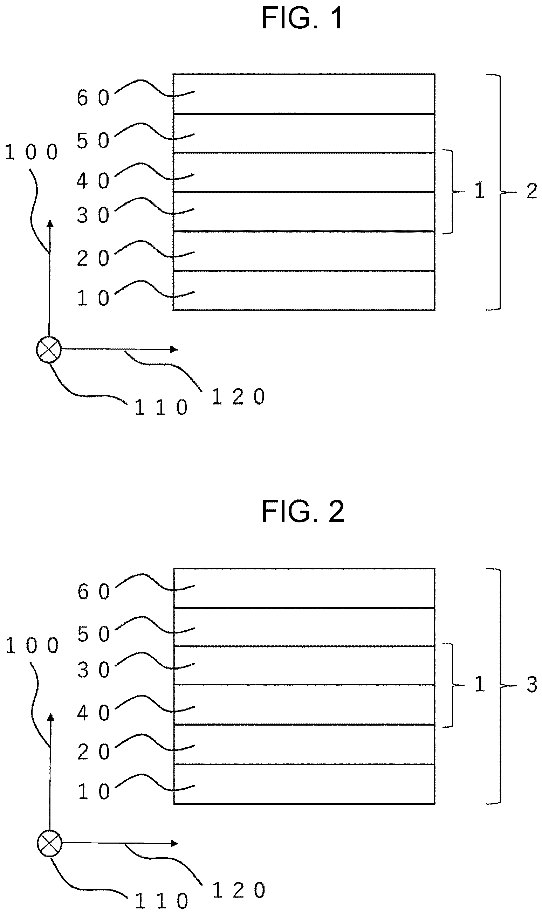

In the present disclosure, a thickness direction 100 refers to the lamination direction of the metallic decorative laminate or metallic article as illustrated in Fig. 1, and a width direction 110 refers to a direction different from the thickness direction and perpendicular to a longitudinal direction 120 of the metallic decorative laminate or metallic article. For example, when an intermediate laminate described below is produced by roll-to-roll production, the longitudinal direction 120 corresponds to a machine direction (MD), and the width direction 110 corresponds to a transverse direction (TD) perpendicular to the MD.

An embodiment of the present disclosure (hereinafter, also referred to as "the present embodiment") will be described below. In the present disclosure, the numerical values related to "or more" "or less" "to" and the like in describing a numerical range are numerical values that can be freely combined.

Furthermore, provisions that are considered to be preferred may be used at will. That is, one provision that is considered to be preferred may be used in combination with one or more other provisions that are considered to be preferred. A combination of preferred provisions is more preferred.

### [Metallic Decorative Laminate]

A metallic decorative laminate of the present embodiment is required to include a first polycarbonate layer 10, a first adhesive layer 20, a metal-layer laminate 1 including a metal layer 30, a second adhesive layer 50, and a second polycarbonate layer 60, in that order. The details of each layer will be described below.

The metallic decorative laminate of the present embodiment can be used to decorate resin components, such as car bumpers, and metal components, (hereinafter also referred to simply as "articles") by film decoration methods, such as insert molding and overlay molding. A multilayer laminate including the metallic decorative laminate may be used to decorate the surface of an article with an adhesion layer or an adhesive layer interposed therebetween, and can be used as the surface layer of an automobile exterior, for example, an automobile pillar, a door molding, a roof molding, the entire door surface, or the entire roof surface. The metallic decorative laminate of the present embodiment exhibits an excellent metallic design and has excellent hydrolysis resistance, thus making it suitable for outdoor use. In addition, the metallic decorative laminate has excellent chemical resistance and thus is suitable for use in decorating four-wheeled vehicles, two-wheeled vehicles, pumps, and the like that use lubricating oil.

Furthermore, as will be described in detail later, the metallic decorative laminate of the present embodiment is preferable because of its ease of manufacture and excellent mass productivity.

To improve the design property and hydrolysis resistance, the metallic decorative laminate of the present embodiment preferably has a layer thickness of 200 µm or more, more preferably 230 µm or more, still more preferably 250 µm or more, and still even more preferably 280 µm or more. To improve the moldability and poor appearance, the metallic decorative laminate preferably has a layer thickness of 500 µm or less, more preferably 400 µm or less, still more preferably 360 µm or less, and still even more preferably 320 µm or less. In some cases, the metal layer is irradiated with irradiation light, such as a YAG laser, from a side of the metallic decorative laminate adjacent to the first polycarbonate layer to burn off the metal layer and express the design. In such cases, the first polycarbonate layer preferably has a small layer thickness. Thus, the upper limit of the layer thickness of the metallic decorative laminate is preferably set to be low.

To balance the design property, moldability, improvement of poor appearance, and hydrolysis resistance, the layer thickness is preferably 200 µm or more and 500 µm or less, more preferably 230 µm or more and 400 µm or less, still more preferably 250 µm or more and 360 µm or less, and still even more preferably 280 µm or more and 320 µm or less.

In the present disclosure, the term "design property" refers to the property of an article to express a metallic design using the metallic decorative laminate of the present disclosure in the article.

In the present disclosure, the term "moldability" refers to the property of ease of manufacture when a metallic article is manufactured using the metallic decorative laminate of the present disclosure. Regarding the moldability, breakage or the like at the time of molding can be inhibited by increasing the layer thickness, and fine portions of the article can also be decorated by decreasing the layer thickness. For example, the evaluation can be performed by a method described in Examples.

In the present disclosure, the term "improvement in poor appearance" mainly refers to inhibiting a deterioration in the appearance of the metallic molded article due to melting (washout) of uncured adhesive in the metallic decorative laminate near an injection gate during injection molding to manufacture an injection molded body including the metallic decorative laminate of the present disclosure.

The layer thickness of the metallic decorative laminate of the present embodiment can be adjusted by adjusting the layer thicknesses of the layers that constitute the laminate.

The metallic decorative laminate of the present embodiment may only include the first polycarbonate layer, the first adhesive layer, the metal-layer laminate including the metal layer, the second adhesive layer, and the second polycarbonate layer, but may also include other resin layers described below.

When the metallic decorative laminate of the present embodiment is disposed on an article to form a metallic formed body as described below, the first polycarbonate layer is preferably located on the article side, and the second polycarbonate layer is preferably located on the outermost surface side of the metallic formed body.

### <Metal-Layer Laminate>

The metal-layer laminate 1 of the present embodiment preferably includes a metal layer and a metal layer-holding layer that holds the metal layer. The metal layer may be disposed on only one surface or on each surface of the metal layer-holding layer. Preferably, the metal layer is disposed on only one side of the metal layer-holding layer because of ease of manufacture while the design property is expressed.

More specifically, a metallic decorative laminate (A) 2 of the present embodiment preferably includes, in this order, the first polycarbonate layer 10, the first adhesive layer 20, the metal layer 30, a metal layer-holding layer 40, the second adhesive layer 50, and the second polycarbonate layer 60, and may further include other layers described below. A metallic decorative laminate (B) 3 of the present embodiment preferably includes, in this order, the first polycarbonate layer 10, the first adhesive layer 20, the metal layer-holding layer 40, the metal layer 30, the second adhesive layer 50, and the second polycarbonate layer 60, and may further include other layers as described below.

In the metallic decorative laminate of the present embodiment, for example, the following lamination configurations can be exemplified from the article side. The symbol "/" indicates the boundary between layers.
(1) First polycarbonate layer 10/first adhesive layer 20/metal layer 30/metal layer-holding layer 40/second adhesive layer 50/second polycarbonate layer 60
(2) First polycarbonate layer 10/first adhesive layer 20/metal layer-holding layer 40/metal layer 30/second adhesive layer 50/second polycarbonate layer 60
(3) First polycarbonate layer 10/first adhesive layer 20/metal layer 30/metal layer-holding layer 40/second adhesive layer 50/design layer/second polycarbonate layer 60
(4) First polycarbonate layer 10/first adhesive layer 20/metal layer-holding layer 40/metal layer 30/second adhesive layer 50/design layer/second polycarbonate layer 60

As for the design layer, a configuration in which the design layer is laminated by printing or a method in which a metal foil is laminated is preferable.

### (Metal Layer-Holding Layer)

As the metal layer-holding layer 40, an existing resin sheet can be used. For example, a sheet containing a polycarbonate-based polyurethane and a silicone-based surfactant can be used. The proportion by mass of the silicone-based surfactant to the polycarbonate-based polyurethane is preferably 2.5 parts or more by mass and 5.0 parts or less by mass based on 100 parts by mass of the polycarbonate-based polyurethane.

The polycarbonate-based polyurethane may contain a reaction product of an isocyanate, a cyclohexane-free linear hydrocarbon polyol, and a cyclohexane-containing polyol. The cyclohexane-free linear hydrocarbon polyol is preferably 0.60 parts or more by mass and 0.80 parts or less by mass, and the cyclohexane-containing polyol is preferably 0.70 parts or more by mass and 0.90 parts or less by mass, based on 1.00 part by mass of the isocyanate.

The use of a polycarbonate-based polyurethane as a metal layer-holding layer makes it possible to reduce tackiness. In some cases, the metal layer-holding layer is wound up as an intermediate before the formation of the metal layer. Even in the case of winding, the metal layer-holding layer can be easily wound up because of its reduced tackiness.

The metal layer-holding layer can be formed by applying a mixture containing a polycarbonate-based polyurethane and a silicone-based surfactant to a release resin layer and drying the mixture. When the proportions of the isocyanate, the cyclohexane-free linear hydrocarbon polyol, and the cyclohexane-containing polyol in the polycarbonate-based polyurethane are within appropriate ranges, even if the metal layer-holding layer is formed by application to the release resin layer in such a manner that the dry film thickness is as small as about 10 µm or more and about 25 µm or less, repulsion is inhibited, thereby making it possible to form a film having a uniform thickness.

When the proportions of the isocyanate, the cyclohexane-free linear hydrocarbon polyol, and the cyclohexane-containing polyol in the polycarbonate-based polyurethane are within appropriate ranges, a uniform metal layer can be formed. That is, the proportions of the isocyanate, the cyclohexane-free linear hydrocarbon polyol, and the cyclohexane-containing polyol in the polycarbonate-based polyurethane are outside the above ranges, blocking may occur in the metal layer-holding layer formed. That is, when the metal layer-holding layer is unwound before the vapor deposition of the metal layer, static electricity is generated. This increases the charged voltage of the metal layer-holding layer, thereby resulting in a failure to the formation of a uniform metal layer or resulting in the formation of a discharge crater in the metal layer, in some cases.

Preferably, the 100% tensile stress of the metal layer-holding layer at 100 °C is 3 N or less, and the elongation at break percentage of the metal layer-holding layer at 100 °C is 210% or more.

The tensile stress and the elongation at break percentage can be measured in accordance with JIS K 7127. That is, the tensile stress can be measured as follows: First, a film of the metal layer-holding layer having a width of 10 mm and a length of 150 mm is used as a sample for measurement, and two parallel gauge marks 50 mm apart are drawn at the middle portion of the sample. The stress when this measurement sample is stretched 100% (i.e., the length of the gauge length is extended to 100 mm) is measured and defined as the 100% tensile stress. The elongation at break percentage is a value that indicates the length dimension at break relative to the length dimension before stretching when the film of the metal layer-holding layer is stretched in the longitudinal direction until it breaks. As a sample for measuring the elongation at break percentage, for example, a film having a width of 10 mm and a length of 150 mm can be used.

When the tensile stress and the elongation at break percentage of the metal layer-holding layer are within the above-described ranges, the formability of the metallic decorative laminate manufactured using the metal-layer laminate is good, and the metal-layer laminate can be inhibited from peeling due to an attempt to return to the original shape after forming.

The metal layer-holding layer preferably further contains a carbodiimide, and the amount of the carbodiimide is preferably 10 parts or more by mass and 25 parts or less by mass per 100 parts by mass of the polycarbonate-based polyurethane. This makes it possible to improve the hydrolysis resistance of the metallic decorative laminate produced using the metal-layer laminate, and to inhibit clouding and the like.

In the metal layer-holding layer, cyclohexyl isocyanate can be used as the isocyanate, and 4,4' methylenebis(cyclohexyl isocyanate) can be preferably used. As the cyclohexane-free linear hydrocarbon polyol, n-pentanedimethanol carbonate and n-heptanedimethanol carbonate can be used, and n-hexanedimethanol carbonate can be preferably used. As the cyclohexane-containing polyol, cyclohexanediethanol carbonate can be used, and cyclohexanedimethanol carbonate can be preferably used.

The metal layer-holding layer preferably has an average thickness of 10 µm or more and 25 µm or less, and the thickness is preferably in the range of the average thickness -0.5 µm or more and the average thickness +0.5 µm or less.

When the thickness of the metal layer-holding layer is within the above range, the winding length of the metal layer-holding layer can be increased, and the amount of production per one time (per batch) can be increased. Furthermore, when the thickness of the metal layer-holding layer is within the above range, the occurrence of defects, such as wrinkles and breaks, in subsequent processes using the metal layer-holding layer can be inhibited, thus improving the handleability of the metal-layer laminate. Moreover, when the thickness of the metal layer-holding layer is within the above range, the tensile stress of the metal layer-holding layer can be sufficiently small, thereby improving the formability of a decorative sheet including the metal-layer laminate.

The thickness of the metal layer-holding layer is preferably in the range of the average thickness -0.5 µm or more and the average thickness +0.5 µm or less. In other words, since the metal layer-holding layer is formed so as to have a uniform thickness, the metal-layer laminate having stable quality and a metallic decorative laminate having stable quality manufactured using the metal-layer laminate can be obtained.

The metal layer-holding layer preferably has a total light transmittance of 90% or more and a haze of 1.3% or less. When the light transmittance and haze are within these ranges, the transparency of the metallic decorative laminate manufactured using the metal-layer laminate is higher, and the metallic design property can be sufficiently imparted to the metallic decorative laminate, thereby providing a desired design property. The total light transmittance can be adjusted to a desired value by appropriately adjusting the material and the layer thickness of the metal layer-holding layer.

The metal layer-holding layer as described above can be formed, for example, using a polycarbonate-based polyurethane dispersion (aqueous polycarbonate-based polyurethane dispersion) in which a polyurethane resin is dispersed in an aqueous solvent, such as water. As the polyurethane dispersion, for example, polyurethane dispersions UW5002 and UW5502 (manufactured by Ube Corporation) can be used.

For the metal layer-holding layer, a single polyurethane resin may be used, or two or more polyurethane resins having different structures may be mixed and used. For example, polyurethane dispersions UW5002 and UW5502 (manufactured by Ube Corporation) and the like can be mixed and used in such a manner that the metal layer-holding layer has the above-described physical properties.

The metal layer-holding layer may be subjected to a matte finish, an etching finish, a hairline finish, or the like in order to impart a desired design property. The metal layer-holding layer may also contain a pigment or dye to obtain a desired color tone.

In addition to the above-described materials, the metal layer-holding layer may contain additives, such as stabilizers, ultraviolet absorbers, lubricants, flame retardants, and antistatic agents.

### (Metal Layer)

The metal layer is held by the metal layer-holding layer. When the metallic decorative laminate is manufactured using the metal-layer laminate, the metallic design property can be imparted to the metallic decorative laminate.

The metal layer may be a uniform layer, or may be a layer in which metallic island structures are continuously present. The sea structure is the first adhesive layer or the second adhesive layer. The metal layer preferably has a sea-island structure in which the metal particles are separated from one another and have gaps, because even when three-dimensional deep drawing is performed, whitening and other phenomena can be inhibited, and metallic luster can be maintained.

The amount of metal per unit area and the layer thickness of the metal layer can be adjusted by the conditions during the production of the metal layer. Details will be described below.

The thickness of the metal layer is not particularly limited as long as it can express the required design, but is preferably 5 nm or more and 100 nm or less, more preferably 10 nm or more and 80 nm or less, still more preferably 20 nm or more and 70 nm or less, and still even more preferably 40 nm or more and 60 nm or less. When the layer thickness of the metal layer is greater than or equal to the lower limit, the layer is uniform, and an excellent metallic design is expressed, which is preferred. When the layer thickness of the metal layer is less than or equal to the upper limit, the manufacturing costs can be reduced while the design property is sufficiently expressed, which is preferred.

In the metallic decorative laminate, external light is reflected by the metal layer to express the metallic design. For this reason, the metallic design is not expressed when there is no external light or when the external light is weak, for example, at night. Thus, there is an embodiment in which a backlight is disposed on the article side of the metallic decorative laminate, and the design is expressed by the transmitted light from the backlight. To provide the effect, the thickness of the metal layer is preferably small and is preferably in the range of 5 nm to 50 nm.

A metal constituting the metal layer is not particularly limited as long as an intended design is expressed, and can be appropriately selected in accordance with the desired design property and the like. The metal constituting the metal layer is preferably one of or a combination of two or more metals or alloys that can impart sufficient metallic luster to the metallic decorative laminate and have excellent malleability. Specifically, it is preferable to use one or two or more selected from the group consisting of aluminum, indium, chromium, zinc, gallium, nickel, tin, silver, gold, silicon, chromium, titanium, platinum, palladium, nickel, stainless steel, Hastelloy, and the like, and alloys thereof.

The metal layer can be formed by, for example, vapor-depositing the above-described metal on the metal layer-holding layer. The metal layer can be formed by, for example, a sputtering method or an ion plating method.

The dimension of the metal-layer laminate of the present embodiment in the width direction is not particularly limited as long as it is an industrially producible width, and is preferably, for example, 1,000 mm or more and 2,000 mm or less. When the polycarbonate-based polyurethane as described above is used in the metal layer-holding layer, a metal layer-holding layer having a uniform layer thickness can be stably formed, which is preferred for industrially producing the metal-layer laminate.

For example, when the metal-layer laminate is transported or stored in a state of the metal-layer laminate as an intermediate of the metallic decorative laminate or the like, a protective film may be further laminated on the metal layer side of the metal-layer laminate in order to prevent dirt or scratches, and a release resin layer may be further laminated on a side of the metal layer-holding layer opposite to the metal layer.

When the polycarbonate-based polyurethane is used in the metal layer-holding layer, a uniform metal layer-holding layer can be formed. Since the generation of static electricity in the metal layer-holding layer is inhibited, blocking of the metal layer-holding layer can be inhibited. This makes it possible to inhibit formation of defects, such as discharge craters, in the metal layer, and also makes it possible to form a metal layer having a uniform layer thickness on the metal layer-holding layer. Furthermore, when a metallic decorative laminate is produced using such a metal-layer laminate, it is possible to obtain a metallic decorative laminate having a design property equivalent to a decorative sheet using a conventional modified polyethylene terephthalate.

The metal-layer laminate may be such that the metal layer is laminated on the side of the metal layer-holding layer adjacent to the first adhesive layer, as in the metallic decorative laminate A illustrated in Fig. 1, or such that the metal layer is laminated on the side of the metal layer-holding layer adjacent to the second polycarbonate layer, as in the metallic decorative laminate B illustrated in Fig. 2.

### <First Polycarbonate Layer>

The first polycarbonate layer is a layer disposed on the lowermost layer (on a side of the injection molded body adjacent to an article) of the metallic decorative laminate. Preferably, the first polycarbonate layer can withstand a temperature at the time of decoration using the metallic decorative laminate. As described above, the metallic decorative laminate expresses the metallic design due to the reflection of external light from the metal layer. Thus, the requirements for transparency and color tone for the first polycarbonate layer, which is closer to an article than the metal layer, are less stringent. However, when a viewer who observes the article recognizes its color, the transparency and the color tone may be appropriately adjusted.

In consideration of the effect on color tone and transparency, the raw material for forming the first polycarbonate layer from a polycarbonate resin can be appropriately selected in consideration of the heat resistance to the temperature during forming, the compatibility with the injection molding resin in insert injection molding, the extrusion resin in extrusion lamination, and the like in accordance with the application.

For example, when high transparency is required, it is possible to use the first polycarbonate layer in which a polycarbonate resin having excellent transparency and high injection adhesion is used as a raw material.

The layer thickness of the first polycarbonate layer can be a thickness commonly used for a decorative sheet. The layer thickness is preferably greater than or equal to the lower limit in order to inhibit the occurrence of defects, such as wrinkles, at the time of lamination with the metal-layer laminate. The layer thickness is preferably less than or equal to the upper limit in order to inhibit breakage of the metallic decorative laminate during forming and to improve the formability of the metallic decorative laminate. The layer thickness is preferably 20 µm or more and 500 µm or less, more preferably 50 µm or more and 300 µm or less, still more preferably 80 µm or more and 200 µm or less, and still even more preferably 100 µm or more and 150 µm or less.

### <First Adhesive Layer>

The first adhesive layer is a layer that bonds the metal-layer laminate and the first polycarbonate layer.

The first adhesive layer is required to contain a reaction product of a polyester-based diol, a polycarbonate-based diol, and an aliphatic isocyanate, a carbodiimide, and a silane coupling agent containing an epoxy group. Each component will be described below.

For example, the first adhesive layer can be formed by applying a urethane-based adhesive, which will be described below, to the metal-layer laminate and/or the first polycarbonate layer, and then curing the adhesive. The urethane-based adhesive is a useful adhesive in view of, for example, transparency, adhesiveness, and heat resistance such that it can withstand the temperature during forming. As a measure of the transparency, for example, light transmittance or haze can be used as an index.

A method for forming the first adhesive layer using the urethane-based adhesive is not particularly limited. For example, the first adhesive layer can be formed by applying an appropriate amount of the adhesive with known means, such as a gravure coater, a reverse coater, a knife coater, or a roll coater, and performing drying as necessary.

The layer thickness of the first adhesive layer can be a thickness commonly used for the metallic decorative laminate. To improve formability and poor appearance, the layer thickness is preferably smaller. To improve the hydrolysis resistance, the layer thickness is preferably larger. The layer thickness is preferably 1 µm or more and 30 µm or less, more preferably 3 µm or more and 25 µm or less, still more preferably 5 µm or more and 20 µm or less, even more preferably 7 µm or more and 15 µm or less, and still even more preferably 8 µm or more and 12 µm or less. In some cases, the metal layer is irradiated with irradiation light, such as a YAG laser, from a side of the metallic decorative laminate adjacent to the first polycarbonate layer to burn off the metal layer and express the design. In such cases, the first polycarbonate layer preferably has a small layer thickness.

### <Second Adhesive Layer>

The second adhesive layer is a layer that bonds the second polycarbonate layer and the metal-layer laminate.

The second adhesive layer is required to contain a reaction product of a polyester-based diol, a polycarbonate-based diol, and an aliphatic isocyanate, a carbodiimide, and a silane coupling agent containing an epoxy group. Each component will be described below.

For example, the second adhesive layer can be formed by applying a urethane-based adhesive, which will be described below, to the metal-layer laminate and/or the second polycarbonate layer. The urethane-based adhesive is a useful adhesive in view of, for example, transparency, adhesiveness, and heat resistance such that it can withstand the temperature during forming. As a measure of the transparency, for example, light transmittance or haze can be used as an index. The adhesive used for the second adhesive layer may be the same as the adhesive used for the first adhesive layer.

A method for forming the second adhesive layer with the adhesive is not particularly limited. For example, the second adhesive layer can be formed by applying an appropriate amount of the adhesive with known means, such as a gravure coater, a reverse coater, a knife coater, or a roll coater, and performing drying as necessary.

The layer thickness of the second adhesive layer can be a thickness commonly used for the metallic decorative laminate. To improve formability and poor appearance, the layer thickness is preferably smaller. To improve the hydrolysis resistance, the layer thickness is preferably larger. The layer thickness is preferably 1 µm or more and 30 µm or less, more preferably 3 µm or more and 25 µm or less, still more preferably 5 µm or more and 20 µm or less, even more preferably 7 µm or more and 15 µm or less, and still even more preferably 8 µm or more and 12 µm or less. The second adhesive layer may have the same layer thickness as the first adhesive layer.

Each of the first adhesive layer and the second adhesive layer is preferably a cured product of the urethane-based adhesive. The first adhesive layer and the second adhesive layer may be formed by curing the urethane-based adhesive having the same composition. The first adhesive layer and the second adhesive layer may be formed under the same conditions regarding the amount of urethane-based adhesive applied and the curing conditions.

### <Second Polycarbonate Layer>

The second polycarbonate layer is a layer disposed on the uppermost layer of the metallic decorative laminate (a side of the injection molded body opposite to an article, and on the viewer side). Preferably, the second polycarbonate layer has transparency to allow an observer to visually recognize reflected light from the metal layer, and can withstand a temperature at the time of decoration using the metallic decorative laminate. In addition, the second polycarbonate layer preferably serves as a protective layer to protect the metal-layer laminate.

The second polycarbonate layer may contain any of various coloring agents and pigments to adjust the transparency, color tone, and the like, and may also be dyed with a dye. The second polycarbonate layer may be subjected to predetermined printing in advance. In this case, printing may be performed on a surface of the second polycarbonate layer exposed to the outside. However, printing is preferably performed on a surface that is opposite to the surface exposed to the outside and that comes into contact with the second adhesive layer, because the durability of the printing can be improved.

As a material for the second polycarbonate layer, a polycarbonate-based resin having excellent processability, heat resistance to the temperature during forming, formability, transparency, impact resistance, and high adhesion can be appropriately selected as the material for the second polycarbonate layer.

The layer thickness of the second polycarbonate layer can be a thickness commonly used for a decorative sheet. The layer thickness is preferably greater than or equal to the lower limit in order to inhibit the occurrence of defects, such as wrinkles, at the time of lamination with the metal-layer laminate. The layer thickness is preferably less than or equal to the upper limit in order to inhibit breakage of the metallic decorative laminate during forming and to improve the formability of the metallic decorative laminate. The layer thickness is preferably 20 µm or more and 500 µm or less, more preferably 50 µm or more and 300 µm or less, still more preferably 80 µm or more and 200 µm or less, and still even more preferably 100 µm or more and 150 µm or less.

### (Urethane-Based Adhesive)

Each of the first adhesive layer and the second adhesive layer needs to contain a reaction product of a polyester-based diol, a polycarbonate-based diol, and an aliphatic isocyanate, a carbodiimide, and a silane coupling agent containing an epoxy group, and is 13.80 parts or more by mass and 14.25 parts or less by mass. A structure derived from the polycarbonate-based diol needs to be contained in an amount of 0.75 parts or more by mass and 1.20 parts or less by mass, a structure derived from the aliphatic isocyanate needs to be contained in an amount of 3.20 parts or more by mass and 4.00 parts or less by mass, a structure derived from the carbodiimide needs to be contained in an amount of 0.08 parts or more by mass and 0.20 parts or less by mass, and a structure derived from the silane coupling agent needs to be contained in an amount of 0.50 parts or more by mass and 0.80 parts or less by mass. Details will be described in the [Urethane-Based Adhesive] section.

The metallic decorative laminate of the present embodiment preferably has good hydrolysis resistance. The specific conditions for the hydrolysis test to evaluate hydrolysis resistance are that the metallic decorative laminate is left to stand for 72 hours under conditions of a temperature of 90°C and a relative humidity of 95% RH.

The criteria for good hydrolysis resistance are that the metallic decorative laminate has a total light transmittance of 10% or more and 20% or less and a haze of 5.5% or less, and that the peeling strength of each of the first adhesive layer and the second adhesive layer is greater than or equal to 20 N/25 mm in a 180° peel test based on JIS K 6854-2, before and after the hydrolysis test.

When the total light transmittance is 10% or more and 20% or less, there are advantages that the metallic decorative laminate has a sufficient metallic design property, and in addition, when a light source is turned on from the back side of the metallic decorative laminate, the metallic decorative laminate can transmit light rays emitted from the light source. Due to this function, the appearance of the metallic decorative laminate when the light source is not turned on in a bright daytime environment has a metallic design, and in a dark environment at night, the light source can be turned on from the back side of the metallic decorative laminate to allow light to shine through. When the total light transmittance is 10% or more, the light is not blocked by the metallic decorative laminate, and sufficient light emission is obtained, which is preferred. When the total light transmittance is 20% or less, the vapor deposition unevenness of the metal of the metal layer is not visually recognized when light is transmitted, and an excellent design property is expressed, which is preferred.

When the haze is 5.5% or less, the degree of diffusion of light passing through the metallic decorative laminate is low, so that the sheet is not cloudy or opaque, and excellent metallic design property can be satisfied. When the haze is 5.5% or less, the degree of diffusion of light passing through the metallic decorative laminate does not affect the fogging or cloudiness of the sheet, and the metallic design property can be satisfied, which is preferred. The lower limit is not particularly limited because smaller haze results in less fogging and cloudiness of the sheet.

The fact that the peeling strength of each of the first adhesive layer 20 and the second adhesive layer 50 in the 180° peel test based on JIS K 6854-2 is greater than or equal to 20 N/25 mm is a measure that the peeling strength is maintained and the adhesion is maintained because the first adhesive layer 20 and the second adhesive layer 50 are not hydrolyzed. That is, when the peeling strength is greater than or equal to 20 N/25 mm, it can be said that peeling of the adhesive layer due to hydrolysis does not occur. The upper limit of the peeling strength is not particularly limited, but since a strong peeling strength results in fracture of the adhesive layer in the 180° peel test, the fracture of the adhesive layer can be regarded as the upper limit.

Preferably, the metallic decorative laminate of the present embodiment does not crack when stretched to an elongation of 200%. The metallic decorative laminate may be used without being stretched, or may be formed into a desired shape and processed into a metallic formed body as described below, and the metallic decorative laminate may be stretched and shaped during the forming. The absence of cracks when stretched to an elongation of 200% is a measure that no cracks are generated in a stretched portion when the metallic decorative laminate is stretched by forming. That is, when no cracks are generated at an elongation of 200%, it can be said that there is no concern about the generation of cracks in the stretched portion of the metallic formed body.

Preferably, the first adhesive layer and the second adhesive layer of the metallic decorative laminate do not melt at a temperature of 300°C to 320°C.

When a metallic injection molded body is manufactured using the metallic decorative laminate, for example, a polycarbonate resin is melted and injected into a gap between an injection mold and the surface of the first polycarbonate layer and/or the surface of the second polycarbonate layer, thereby forming a resin layer. The molding temperature of the polycarbonate resin during injection molding is as high as 300°C to 320°C. Thus, when the first adhesive layer and the second adhesive layer melt at a temperature of 300°C or higher and 320°C or lower, a washout occurs, resulting in a poor appearance of the metallic injection molded body.

Here, the washout specifically refers to a phenomenon in which at least one of the first adhesive layer and the second adhesive layer melts due to the heat of the polycarbonate resin during injection molding, resulting in the disappearance of the metal layer on the surface of the metallic injection molded body near the mold gate.

When the first adhesive layer and the second adhesive layer do not melt at a temperature of 300°C or higher and 320°C or lower, the washout does not occur, and thus the occurrence of a poor appearance of the metallic injection molded body due to the washout can be inhibited.

### [Metallic Formed Body]

The metallic formed body of the present embodiment includes a formed body of the metallic decorative laminate (300A or 300B). The metallic decorative laminate is as described above, and the description thereof will be omitted.

The metallic formed body is manufactured from the metallic decorative laminate by, for example, a manufacturing method described below, and is formed into a desired shape in accordance with the purpose. For example, the metallic formed body can be used for the housings of smartphones and mobile phones, door mirror housings for automobiles, front grilles, door handles, center wheel caps, emblems, ornaments, garnishes, lamp reflectors, center consoles, installation panels, etc., housings and decorative parts of personal computers, television sets, and home appliances, housings and decorative parts of pachinko, pachislot, game machines, etc., or for general-purpose items such as wheeled bags and suitcases, and can impart metallic decorative and design properties in place of plating or metal materials.

The metallic formed body may have another configuration in addition to the above configuration. For example, until the metallic formed body is used, in order to keep the surfaces of the protective layer and a substrate layer clean and to inhibit the adhesion of dirt, release paper, a protective film, or the like can be provided on the surfaces of the protective layer and the substrate layer.

The metallic formed body may be provided with a backlight to transmit light through the metal layer, thereby providing decorative and design properties. In such a case, the metallic formed body is required to be transparent. The light transmittance and haze as measures of transparency have been described above, and the descriptions thereof are omitted.

### [Injection Molded Body]

The injection molded body of the present embodiment includes an injection molded resin layer on the surface of the first polycarbonate layer and/or the surface of the second polycarbonate layer of the metallic formed body of the present embodiment. The injection molded body can be further processed and used for the housings of smartphones and mobile phones, door mirror housings for automobiles, front grilles, door handles, center wheel caps, emblems, ornaments, garnishes, lamp reflectors, center consoles, installation panels, etc., and housings and decorative parts of personal computers, television sets, and home appliances. The metallic formed body is as described above, and the description thereof is omitted.

The thickness of the resin layer is not particularly limited, but can be, for example, 100 µm or more and 20 mm or less. As the resin used, a polycarbonate, which is a thermoplastic resin, can be used.

### [Method for Manufacturing Metallic Decorative Laminate]

A method for manufacturing a metallic decorative laminate of the present embodiment includes a first bonding step and a second bonding step described below. An example of a method for manufacturing a metallic decorative laminate will be described below. The metallic decorative laminate (B) 3 can be manufactured with reference to the method for manufacturing the metallic decorative laminate (A) 2.

The method for manufacturing a decorative sheet of the present embodiment includes a first laminate formation step of forming a film of a mixture containing an aqueous polycarbonate-based polyurethane dispersion and a silicone-based surfactant on the surface of a release resin layer in such a manner that the film has an average dry film thickness of 10 µm or more and 25 µm or less, thereby providing a first laminate in which a release resin layer and a metal layer-holding layer are laminated; an unwinding step of unwinding the roll of the first laminate; and, after the unwinding step, a vapor deposition step of forming a metal layer by vapor deposition on the metal layer-holding layer to provide a second laminate that includes a metal-layer laminate including the metal layer-holding layer and the metal layer. Usually, the unwinding step and the vapor deposition step are successively performed.

The method for manufacturing the decorative sheet 300A will be described below in the order of the first laminate formation step, the unwinding step, the vapor deposition step, the first bonding step, and the second bonding step.

### (First Laminate Formation Step)

In the first laminate formation step, the mixture containing the aqueous polycarbonate-based polyurethane dispersion and the silicone-based surfactant is formed into a film having an average dry film thickness of 10 µm or more and 25 µm or less. Specifically, the mixture is applied to the release resin layer with, for example, a die coater, and then dried to form the metal layer-holding layer 40. As a result, the metal layer-holding layer 40 is formed without stretching, thereby providing the first laminate.

The mixture of raw materials for the metal layer-holding layer 40 contains the silicone-based surfactant. Thus, when the metal layer-holding layer 40 is formed by casting, the wettability is improved to reduce repellency during the formation of the metal layer-holding layer 40, thereby making it possible to uniformly form the metal layer-holding layer 40.

The mixture may contain a carbodiimide. When the metal layer-holding layer 40 has insufficient solvent resistance, the metal layer-holding layer 40 may turn white when a urethane-based adhesive is applied, thereby reducing the glossiness of the metallic decorative laminate (A) 2, in some cases. When the mixture of raw materials for the metal layer-holding layer 40 contains the carbodiimide, the metal layer-holding layer 40 can have improved solvent resistance, and whitening can be inhibited even when the urethane-based adhesive contains a solvent.

The mixture of the raw materials for the metal layer-holding layer 40 may further contain water. When the mixture contains water, the volatility of the solvent is improved, and the viscosity of the mixture of the raw materials is reduced, thereby making it possible to inhibit the foaming of the mixture of the raw materials. In addition, blocking of the metal layer-holding layer 40 can be inhibited.

To form a uniform film of the metal layer-holding layer 40 in the first laminate formation step, when the mixture of the raw materials is prepared, each raw material may be subjected to filtration in advance. A filter used for the filtration may have a pore size of, for example, 1 um, and the material of the filter may be selected from various materials in accordance with each raw material.

The drying treatment after applying the mixture of the raw materials can be performed under conditions such that the solvent and the like contained in the mixture of the raw materials are sufficiently removed and such that a film of the metal layer-holding layer 40 is formed. For example, the drying treatment can be performed at a temperature of about 150°C for about 3 minutes.

The size of the release resin layer is not particularly limited. For example, in consideration of industrial production, the width can be 1,000 mm or more and 2,000 mm or less, and the length can be 300 m or more and 500 m or less. Such a release resin layer is usually in a wound state (roll), and while this roll is being unwound, a mixture of the raw materials for the metal layer-holding layer is applied thereto and then dried to provide the first laminate.

### (Unwinding Step)

The first laminate is usually manufactured continuously in a long shape. Thus, the first laminate is wound up together with the formation of the metal layer-holding layer 40, and is temporarily stored in the wound state before the formation of the metal layer 30. The unwinding step is a step of unwinding such a roll of the first laminate prior to the formation of the metal layer 30.

### (Vapor Deposition Step)

The vapor deposition step is a step of forming the metal layer 30 by vapor deposition on the metal layer-holding layer 40 after the unwinding step. By the vapor deposition step, the metal-layer laminate 1 including the metal layer-holding layer 40 and the metal layer 30 is provided.

A metal-layer laminate including the metal-layer laminate 1 may be distributed or stored as an intermediate for the metallic decorative laminate (A) 2 or the metallic decorative laminate (B) 3.

### (First Bonding Step)

The first bonding step is a step in which a urethane-based adhesive is applied to the first polycarbonate layer 10 and/or the metal-layer laminate 1, the urethane-based adhesive is dried, and then the first polycarbonate layer 10 and the metal-layer laminate 1 are bonded together.

When the metallic decorative laminate (A) 2 is manufactured, after the vapor deposition step, the urethane-based adhesive is applied to the first polycarbonate layer 10 and/or the metal layer 30 of the second laminate having the metal-layer laminate 1 and dried, and then the metal layer 30 and the first polycarbonate layer 10 are bonded together. This bonding also forms the first adhesive layer 20.

That is, in the first bonding step, it is sufficient to apply the urethane-based adhesive to at least one of the metal layer 30 of the metal-layer laminate 1 and the first polycarbonate layer 10, and it may be applied to either one or both.

When the metallic decorative laminate (B) 3 is manufactured, after the vapor deposition step, the urethane-based adhesive is applied to the metal layer-holding layer 40 of the second laminate including the first polycarbonate layer 10 and/or the metal-layer laminate 1 and dried, and then the metal layer-holding layer 40 and the first polycarbonate layer 10 are bonded together. This bonding also forms the first adhesive layer 20.

That is, in the first bonding step, it is sufficient to apply the urethane-based adhesive to at least one of the metal layer-holding layer 40 of the metal-layer laminate 1 and the first polycarbonate layer 10, and it may be applied to either one or both.

### (Second Bonding Step)

The second bonding step is a step in which a urethane-based adhesive is applied to the metal-layer laminate 1 and/or the second polycarbonate layer 60, the urethane-based adhesive is dried, and then the metal-layer laminate 1 and the second polycarbonate layer 60 are bonded together.

When the metallic decorative laminate (A) 2 is manufactured, after the vapor deposition step, the urethane-based adhesive is applied to the metal layer-holding layer 40 of the second laminate including the second polycarbonate layer 60 and/or the metal-layer laminate 1 and dried, and then the metal layer-holding layer 40 and the second polycarbonate layer 60 are bonded together. This bonding also forms the second adhesive layer 50.

That is, in the second bonding step, it is sufficient to apply the urethane-based adhesive to at least one of the metal layer-holding layer 40 and the second polycarbonate layer 60 of the metal-layer laminate 1, and it may be applied to either one or both.

When the metallic decorative laminate (B) 3 is manufactured, after the vapor deposition step, the urethane-based adhesive is applied to the metal layer 30 of the second laminate including the second polycarbonate layer 60 and/or the metal-layer laminate 1 and dried, and then the metal layer 30 and the second polycarbonate layer 60 are bonded together. This bonding also forms the second adhesive layer 50.

That is, in the second bonding step, it is sufficient to apply the urethane-based adhesive to at least one of the metal layer 30 of the metal-layer laminate 1 and the second polycarbonate layer 60, and it may be applied to either one or both.

The order of these bonding steps is not particularly limited, and the first bonding step may be performed first and then the second bonding step, or the second bonding step may be performed first and then the first bonding step, or the first bonding step and the second bonding step may be performed simultaneously.

In the method for manufacturing a decorative sheet of the present embodiment, the roll of the laminate (first laminate) of the release resin layer and the metal layer-holding layer 40 is used, but the metal layer 30 may be laminated without winding up the first laminate.

### [Method for Metallic Formed Body]

A method for manufacturing the metallic formed body of the present embodiment includes a formation step of bringing the metallic decorative laminate of the present embodiment, the metallic decorative laminate having a surface temperature of 150°C or higher and 200°C or lower, into close contact with a mold to provide the formed body of the metallic decorative laminate.

### (Formation Step)

To perform the thermoforming of the metallic decorative laminate, the surface temperature of the metallic decorative laminate is set to 150°C or higher and 200°C or lower, so that the metallic decorative laminate does not draw down during forming, and whitening phenomenon does not occur, thereby making it possible to satisfy good formability. Since the surface temperature is 150°C or higher, the metallic decorative laminate is sufficiently softened. In addition, the metallic decorative laminate does not sag and deform due to the drawdown phenomenon, which makes processing and forming difficult. Since the surface temperature is 200°C or lower, it is possible to inhibit cases where the metallic decorative laminate is too soft and difficult to form due to a molten state, or where whitening or other phenomena are likely to occur.

The shape of the mold with which the metallic decorative laminate is brought into close contact can be any shape so that the metallic formed body can have a desired shape. For example, male and female molds with chrome-plated brass surfaces can be used. The temperature of the mold can be set to any desired temperature in consideration of control of the surface temperature of the metallic decorative laminate and control of the cooling conditions of the metallic formed body after the formation step.

As a method for bringing the metallic decorative laminate into close contact with the mold, any method can be used in consideration of ease of forming, cost, etc., such as straight forming using a female mold, drape forming using a male mold, and plug-assisted forming using a plug (auxiliary mold). In addition, a vacuum forming method can be used in which the metallic decorative laminate is sucked to a mold, or an air-pressure forming method can be used in which the metallic decorative laminate is brought into close contact with a mold by using compressed air pressure. For example, by bringing the metallic decorative laminate into close contact with a mold using vacuum and/or compressed air, the adhesion between the metallic decorative laminate and the mold is improved, allowing it to be processed into a more precise shape.

### (Clamping Step)

The method for manufacturing a metallic formed body of the present embodiment can include a clamping step of clamping the metallic decorative laminate prior to the formation step. This step allows the metallic decorative laminate to be adjusted and fixed in such a manner that the metallic decorative laminate does not loosen during forming. The clamping can be performed, for example, by gripping both ends of the metallic decorative laminate using multiple holding means that can grip both surfaces of the metallic decorative laminate. Gripping of the metallic decorative laminate is not limited to both ends of the metallic decorative laminate, but any portion of the metallic decorative laminate can be gripped. Usually, both end portions of the metallic decorative laminate in the width direction can be gripped for continuous production of the metallic formed body. In the case of the batch production of the metallic formed body using a rectangular piece of the metallic decorative laminate cut to a predetermined length, the four end portions can be gripped by upper and lower frames.

### (Heating Step)

The method for manufacturing a metallic formed body according to an embodiment of the present invention can include a heating step of heating the metallic decorative laminate after the clamping step. For example, after the metallic decorative laminate at room temperature is clamped and adjusted so as not to slacken, multiple heaters or the like can be used as heating means, and these heaters or the like can be arranged above and below the metallic decorative laminate, so that both surfaces of the metallic decorative laminate can be uniformly heated at the same time. By this heating step, the surface temperature of the metallic decorative laminate can be controlled to 150°C or higher and 200°C or lower.

### (Other Steps)

The method for manufacturing a metallic formed body may further include other steps in addition to the steps described above. For example, the method may include a bonding step of bonding a protective film or the like to the surface of the protective layer or the substrate layer in order to keep the surfaces of the protective layer or the substrate layer clean and inhibit the adhesion of dirt until the metallic formed body is processed in the next step. Furthermore, the surface of an injection molded product can be decorated by insert injection molding in which the metallic formed body is inserted into an injection mold and then a resin is injected.

### [Method for Manufacturing Injection Molded Body]

A method for manufacturing the injection molded body of the present embodiment includes an injection molding step of, using an injection mold, injecting a resin into a gap between the injection mold and the surface of the first polycarbonate layer 10 and/or the surface of the second polycarbonate layer 60 of the metallic formed body obtained by the method for manufacturing a metallic formed body of the present embodiment, to form a resin layer, thereby providing an injection molded body in which the metallic formed body and the resin layer are integrated. The metallic molded body is as described above, and the description thereof is omitted.

The injection molding step can be performed using a common injection molding machine. As the resin used, a polycarbonate, which is a thermoplastic resin, can be used. The polycarbonate can be melted and injected into the gap between the injection mold and the surface of the first polycarbonate layer 10 and/or the surface of the second polycarbonate layer 60, thereby forming the resin layer.

The method for manufacturing an injection molded body can further include a trimming step of trimming the metallic formed body to a desired shape before the injection molding step, a cooling step of cooling the molded article after the injection molding step, and a removal step of removing the molded article from the injection mold after the cooling step.

### [Urethane-Based Adhesive]

The urethane-based adhesive of the present embodiment is a urethane-based adhesive for the metallic decorative laminate used in the present embodiment. The urethane-based adhesive contains a reaction product of a polyester-based diol, a polycarbonate-based diol, and an aliphatic isocyanate, a carbodiimide, and a silane coupling agent containing an epoxy group.

As urethane-based adhesives used for metallic decorative laminates, urethane-based adhesives each composed only of a polyester-based diol as a main agent, an aliphatic isocyanate as a curing agent, and a solvent that dissolves them have typically been used. Such a urethane-based adhesive exhibits adhesiveness by reacting a polyester-based diol with an aliphatic isocyanate to form urethane bonds. However, as mentioned above, this adhesive cannot pass the hydrolysis test under the more severe test conditions and does not satisfy the hydrolysis resistance. When a polycarbonate resin is used as a resin for an injection molded body, poor appearance of the metallic molded article is caused by the washout of the adhesive.

Thus, in the present embodiment, the main agent is changed from being composed solely of a polyester-based diol to being partially replaced with a polycarbonate-based diol, and the polyester-based diol and the polycarbonate-based diol are used in combination. Furthermore, a larger amount of the aliphatic isocyanate can result in higher heat resistance of the first adhesive layer and the second adhesive layer. As a result, it is possible to inhibit the occurrence of the washout and thus inhibit the occurrence of poor appearance of the metallic molded article.

The urethane-based adhesive of the present embodiment contains the polyester-based diol and the polycarbonate-based diol in combination, a larger amount of the aliphatic isocyanate, and the carbodiimide and the silane coupling agent, which are additionally added. As a result, it was possible to pass the hydrolysis test under more severe test conditions, and by performing the hydrolysis test, the adhesive strength was improved as compared with that before the test. In addition, it was possible to inhibit an increase in the haze value due to the hydrolysis test, and it was possible to satisfy an excellent metallic design property before and after the hydrolysis test.

To satisfy the effect of inhibiting the washout and the hydrolysis resistance, it is important that the polyester-based diol, the polycarbonate-based diol, the aliphatic isocyanate, the carbodiimide, and the silane coupling agent be compatible with each other, and the proportions of these components contained are also important. The urethane-based adhesive of the present embodiment needs to contain a structure derived from the polyester-based diol in an amount of 13.80 parts or more by mass and 14.25 parts or less by mass, a structure derived from the polycarbonate-based diol in an amount of 0.75 parts or more by mass and 1.20 parts or less by mass, a structure derived from the aliphatic isocyanate in an amount of 3.20 parts or more by mass and 4.00 parts or less by mass, a structure derived from the carbodiimide in an amount of 0.08 parts or more by mass and 0.20 parts or less by mass, and a structure derived from the silane coupling agent in an amount of 0.50 parts or more by mass and 0.80 parts or less by mass.

While the polyester-based diol has the advantage of providing excellent adhesion between the urethane-based adhesive containing it and other layers, it may be poor in heat resistance and hydrolysis resistance. An adhesive layer containing the polycarbonate-based diol has the advantage of being excellent in chemical resistance, hydrolysis resistance, and heat resistance, but there is a problem of a decrease in adhesion. Optimizing the balance of adhesion, hydrolysis resistance, and heat resistance resulted in the aforementioned amounts. A large amount of the polyester-based diol leads to inferior heat resistance and hydrolysis resistance, whereas a large amount of the polycarbonate-based diol leads to a reduction in adhesion.

In the present disclosure, the term "structure derived from ..." means to include each component used in manufacturing the urethane-based adhesive and reaction products thereof, and also means to include units derived from each component contained in the polymer. This is substantially the same as the amount of each component used in manufacturing the urethane-based adhesive. Here, the term "substantially" means excluding the amount removed in the course of the manufacturing process.

The preferred amount of each component relative to 13.80 parts or more by mass and 14.25 parts or less by mass of the structure derived from the polyester-based diol will be described below.

When the structure derived from the polycarbonate-based diol is 0.75 parts or more by mass, the effect of inhibiting the washout is provided. However, when the amount is more than 1.2 parts by mass, the adhesive layer using this may have a whitish appearance, and the adhesive may have a high liquid viscosity, thereby making it difficult to handle. For these reasons, in the above proportion by mass, the polycarbonate-based diol is 0.75 parts or more by mass and 1.20 parts or less by mass.

The amount of the structure derived from the aliphatic isocyanate can be determined based on a calculation method in which the amount of isocyanate groups and the amount of hydroxy groups in a typical urethane resin are considered to be equal. That is, it can be optimized according to the total OH value (mg/KOHg) of the polyester-based diol and the polycarbonate-based diol and the NCO content of the aliphatic isocyanate. When the amount of the structure derived from the aliphatic isocyanate is small, sufficient urethane bonds may fail to be formed, resulting in an unsatisfactory adhesive performance. When the amount of the structure derived from the aliphatic isocyanate is large, water and isocyanate may react more easily, causing brushing. The adhesive layer may become cloudy and milky white, resulting in an increase in haze value or a problem with total light transmittance as the metallic decorative laminate.

In the above proportion by mass, when the carbodiimide-derived structure is 0.08 parts or more by mass and 0.20 parts or less by mass, the effect of improving the hydrolysis resistance is provided. When the amount of the carbodiimide-derived structure is less than 0.08 parts by mass, the effect of improving the hydrolysis resistance may be insufficient. Even if the amount of the carbodiimide-derived structure is more than 0.20 parts by mass, the effect of improving the hydrolysis resistance is not enhanced. Thus, it is sufficient to set the upper limit to 0.20 parts by mass.

As the carbodiimide, a commercially available carbodiimide dissolved in a solvent can be used, and the carbodiimide having an NCO group content of 0% or more by mass and 0.50% or less by mass can be used.

In the above proportion by mass, when the structure derived from the silane coupling agent is 0.50 parts or more by mass and 0.80 parts or less by mass, the use of the structure in combination with the carbodiimide enables the adhesive to satisfy the hydrolysis resistance and to pass the hydrolysis test under the more severe test conditions. When the structure derived from the silane coupling agent is 0.50 parts or more by mass, the effect of improving hydrolysis resistance can be sufficiently provided. When the structure derived from the silane coupling agent is 0.8 parts 0 or less by mass, the aggregation and whitening of the silane coupling agent is inhibited. This can inhibit an increase in the haze value and the occurrence of a problem with the total light transmittance of the metallic decorative laminate.

As the silane coupling agent, a silane coupling agent containing an epoxy group as an organic functional group can be used. For example, 3-glycidoxypropyltrimethoxysilane can be used.

There is a use example in which a light source is turned on from the back surface of the metallic decorative laminate and light rays emitted from the light source are transmitted through the metallic decorative laminate. In this use example, when the light source is not turned on in a bright daytime environment, the appearance of the metallic decorative laminate is a metallic design due to the metal layer. When the light source is turned on from the back side of the metallic decorative laminate in a dark environment at night, a design that is a combination of the metallic layer and the transmitted light is expressed.

### EXAMPLES

The present embodiment will now be described in more detail with reference to examples. However, the present invention is not limited to the following examples.

### (Evaluation Method)

### [Evaluation of Metallic Decorative Laminate]

### 1. Film Thickness of Adhesive Layer (Film Thickness of Adhesive Layer in Tables 4 to 7)

The film thickness of an adhesive layer was measured by slicing a section of a metallic decorative laminate using a microtome and observing the thickness using a microscope. A first adhesive layer and a second adhesive layer had the same thickness.

### 2. Appearance Evaluation

The appearance of the metallic decorative laminate was visually observed to evaluate the presence or absence of an appearance defect, such as a sense of brightness, unevenness, or smearing. When there was no appearance defect, such as a sense of brightness, unevenness, or smearing, the laminate was denoted as A, indicating that it was acceptable. When there was an appearance defect, such as a sense of brightness, unevenness, or smearing, the laminate was denoted as B, indicating that it was unacceptable.

### 3. Optical Properties

For the metallic decorative laminate manufactured, the total light transmittance and the haze value were measured before and after a hydrolysis test. When the laminate had a light transmittance of 10% to 20% or more and a haze of 5.5% or less, the laminate was determined to be acceptable, otherwise it was determined to be unacceptable.

The total light transmittance and haze were measured with an NDH 7000SPII Haze Meter (manufactured by Nippon Denshoku Industries Co., Ltd.), in accordance with JIS K 7105.

The hydrolysis test was a test in which the metallic decorative laminate was left to stand for 72 hours in a constant temperature and humidity chamber under conditions of a temperature of 90°C and a relative humidity of 95% RH. After the hydrolysis test was completed, the metallic decorative laminate was taken out of the constant temperature and humidity chamber and left to stand for 1 hour at 25°C, and then the total light transmittance and haze value were measured. In Tables 4 to 7, "Optical properties" indicate values before the hydrolysis test, and "Optical properties after hydrolysis" indicate values after the hydrolysis test.

### 4. Adhesion

The adhesion of each of the adhesive layers of the manufactured metallic decorative laminate was evaluated before and after the hydrolysis test by a 180° peel test based on JIS K 6854-2. Specifically, when the adhesion of the adhesive layer between the polycarbonate layer and the metal layer-holding layer was tested, a test specimen was prepared by making a cut in the metallic decorative laminate in such a manner that the polycarbonate layer and the metal layer-holding layer were gripped with an upper chuck and a lower chuck, respectively, and then a peel test was performed. When the adhesion of the adhesive layer between the polycarbonate layer and the metal layer was tested, a test specimen was prepared by making a cut in the metallic decorative laminate in such a manner that the polycarbonate layer and the metal layer were gripped with the upper chuck and the lower chuck, respectively, and a peel test was performed.

When the peel strength of each of the first adhesive layer and the second adhesive layer was greater than or equal to 20 N/25 mm, the laminate was determined to be acceptable. At a peel strength of less than 20 N/25 mm, the laminate was determined to be unacceptable.

The hydrolysis test was a test in which the metallic decorative laminate was left to stand for 72 hours in a constant temperature and humidity chamber under conditions of a temperature of 90°C and a relative humidity of 95% RH. After the hydrolysis test was completed, the test specimen was removed from the constant temperature and humidity chamber and left to stand for 1 hour at 25°C. Thereafter, the adhesion of the metallic decorative laminate was evaluated by a 180° peel test based on JIS K 6854-2. In Tables 4 to 7, "Adhesion" indicates values before the hydrolysis test, and "Adhesion after hydrolysis" indicates values after the hydrolysis test.

### [Evaluation of Injection Molded Body]

### 5. Evaluation of Optical Properties

For the manufactured injection molded body, the total light transmittance and the haze value were measured before and after the hydrolysis test. When the injection molded body had a light transmittance of 10% to 20% or more and a haze of 5.5% or less, the injection molded body was determined to be acceptable, otherwise it was determined to be unacceptable.

The total light transmittance and haze were measured with an NDH 7000SPII Haze Meter (manufactured by Nippon Denshoku Industries Co., Ltd.), in accordance with JIS K 7105.

The hydrolysis test was a test in which the injection molded body was left to stand for 72 hours in a constant temperature and humidity chamber under conditions of a temperature of 90°C and a relative humidity of 95% RH. After the hydrolysis test was completed, the injection molded body was taken out of the constant temperature and humidity chamber and left to stand for 1 hour at 25°C, and then the total light transmittance and haze value were measured. In Tables 4 to 7, "Optical properties of injection molded body" indicate values before the hydrolysis test, and "Optical properties of injection molded body after hydrolysis" indicate values after the hydrolysis test.

### 6. Appearance Evaluation of Injection Molded Body>

The appearance of the metallic decorative laminate at an angled portion and a corner portion of the injection molded body was visually observed. The metallic decorative laminate was stretched at the corner portion and the angled portion by preform molding and injection molding, and the degree of stretching was equivalent to an elongation of 200% before stretching. Since the metal layer-holding layer, the first polycarbonate layer, and the second polycarbonate layer of the metallic decorative laminate are easily stretched, no abnormalities are observed in these layers at the angled portion and the corner portion of the injection molded body. However, the adhesive that crosslinks through urethane bonds is used for the first adhesive layer and the second adhesive layer. Thus, depending on the formulation of the adhesive, the elongation may be insufficient, and as a result, the angled portion and the corner portion of the injection molded body may fail to withstand the stretching, causing cracks and a cloudy appearance. Since the injection molded body in which such cloudiness was observed was unacceptable as a product, the presence or absence of cloudiness was visually evaluated in this evaluation. The injection molded body that was not cloudy and had no abnormalities was denoted as A, indicating that it was acceptable. The injection molded body that was cloudy or had obvious cracks was denoted as B, indicating that it was unacceptable.

### <Determination of Presence or Absence of Washout>

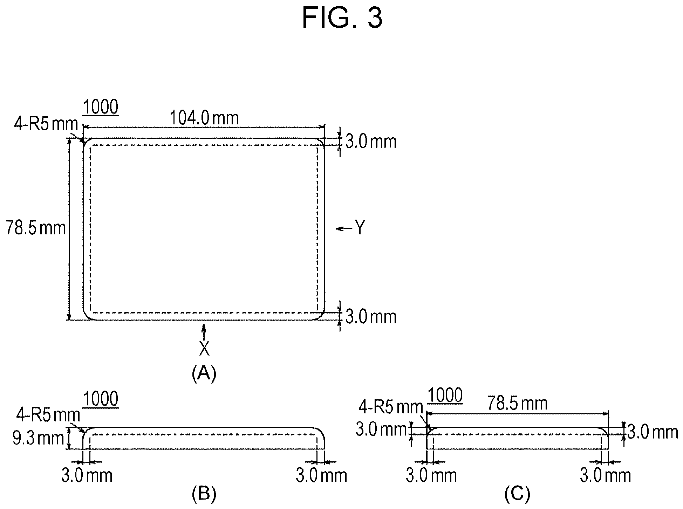

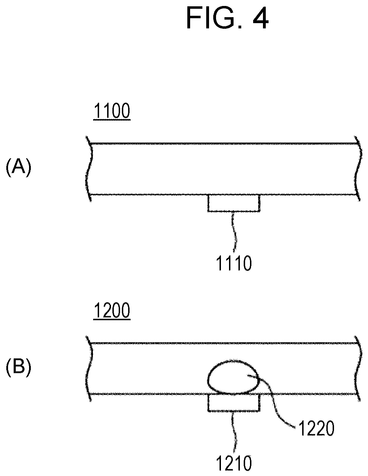

The appearance of the injection molded body near the gate was visually observed to determine the presence or absence of a washout. Fig. 3 presents schematic views of an injection molded body 1100 free of a washout (Fig. 4(A)) and an injection molded body 1200 with a washout (Fig. 4(B)). The portions protruding from the injection molded bodies 1100 and 1200 are gate portions 1110 and 1210, where the polycarbonate injected into the mold has hardened inside the gate. Fig. 4(A) and (B) schematically illustrate the gate portions 1110 and 1210 and portions of the injection molded bodies 1100 and 1200 in the vicinity thereof. In the injection molded body 1200, the washout portion 1220 in a state in which the metallic decorative laminate was melted and lacking in an elliptical-shaped portion was recognized in the vicinity of the gate portion 1210 (Fig. 4(B)). In the injection molded body 1100, no abnormality, such as a washout, was observed in the metallic decorative laminate even around the gate portion 1110 (Fig. 4(A)). The shape of the washout is not limited to an elliptical shape like the washout portion 1220, but can be a variety of shapes. In this evaluation, the injection molded body 1100 in which no abnormality was found in the metallic decorative laminate even in the gate portion 1110 and its surrounding portion as illustrated in Fig. 3(A) was rated as A, indicating that it was acceptable, and the injection molded body 1200 in which the metallic decorative laminate was melted and lacked around the gate portion 1210 as illustrated in Fig. 4(B) was rated as B, indicating that it was unacceptable.

The evaluation results are presented in Tables 3 to 7. In Tables 3 to 7, the item PU-PC indicates the results of the peel strength of the adhesive layer between the metal layer-holding layer and the polycarbonate layer, and the item PC-In indicates the results of the peel strength of the adhesive layer between the polycarbonate layer and the metal layer.

### [Manufacturing of Metallic Decorative Laminate]

### <Production of Polycarbonate Layer>

A polycarbonate resin (S2000, manufactured by Mitsubishi Engineering-Plastics Corporation) was extruded to form a film having a thickness of 125 µm. This film was cut to A3 size (297 mm × 420 mm) and used as a film for each of the first polycarbonate layer and the second polycarbonate layer.

### <Production of Metal-Layer Laminate>

A mixture, containing a polycarbonate-based polyurethane and a silicone-based surfactant, prepared by mixing 21 parts of an aqueous polyurethane dispersion (UW5002 (manufactured by Ube Corporation)), 9 parts of an aqueous polyurethane dispersion (UW5502 (manufactured by Ube Corporation)), 0.3 parts of a silicone-based surfactant (BYK-345 (manufactured by BYK)), and 6 parts of water was applied to a release resin layer (PET film (G2000 (manufactured by Toyobo Co., Ltd.))) and dried at 150°C for 3 minutes. Then the release resin layer was peeled off, thereby producing a metal layer-holding layer having a dry film thickness of 20 µm. Indium was deposited on this metal layer-holding layer by a vacuum deposition method to form a metal layer having a thickness of 50 nm, thereby producing a metal-layer laminate. This metal-layer laminate was cut to A3 size (297 mm × 420 mm) and used as the metal-layer laminate.

### <Bonding of Polycarbonate Layer and Metal-Layer laminate>

A mixture of a main agent, which was made of a mixture of a polyester-based diol, a polycarbonate-based diol, a carbodiimide, a silane coupling agent containing an epoxy group, and ethyl acetate (EtAC), and a curing agent, which was made of an aliphatic isocyanate, was used as a urethane-based adhesive for a metallic decorative laminate.

As the polyester-based diol, TM-K51 (manufactured by Toyo-Morton Co., Ltd.) was used. As the polycarbonate-based diol, Duranol T5652 (manufactured by Asahi Kasei Corp.) was used. As the aliphatic isocyanate, CAT-RT85 (manufactured by Toyo-Morton Co., Ltd.) was used. As the carbodiimide, Carbodilite V-07 (manufactured by Nisshinbo Chemical Inc.) was used. As the silane coupling agent containing an epoxy group (silane coupling agent in the tables), KBM-403 (manufactured by Shin-Etsu Chemical Co., Ltd.) was used.

Tables 1 to 3 present the formulations of the urethane-based adhesives for the metallic decorative laminates in Examples 1 to 7 and Comparative Examples 1 to 11.

**[Table 1]**

| | Example 1 | Example 2 | Example 3 | Example 4 | Example 5 | Example 6 | Example 7 |
|---|---|---|---|---|---|---|---|
| Polyester-based diol | 14.25 | 14.25 | 13.80 | 13.80 | 13.80 | 13.80 | 14.25 |
| Polycarbonate-based diol | 0.75 | 0.75 | 0.75 | 1.20 | 1.20 | 1.20 | 1.20 |
| Aliphatic isocyanate | 3.21 | 3.21 | 3.21 | 3.21 | 3.21 | 3.21 | 4.00 |
| Carbodiimide | 0.17 | 0.17 | 0.08 | 0.08 | 0.20 | 0.20 | 0.20 |
| Silane coupling agent | 0.50 | 0.80 | 0.50 | 0.50 | 0.50 | 0.80 | 0.50 |
| EtAc | 11.00 | 11.00 | 11.00 | 11.00 | 11.00 | 11.00 | 11.00 |

**[Table 2]**

| | Comparative Example 1 | Comparative Example 2 | Comparative Example 3 | Comparative Example 4 | Comparative Example 5 | Comparative Example 6 |
|---|---|---|---|---|---|---|
| Polyester-based diol | 15.00 | 14.25 | 14.25 | 14.25 | 14.50 | 14.25 |
| Polycarbonate-based diol | 0.00 | 0.75 | 0.75 | 0.75 | 0.50 | 0.75 |
| Aliphatic isocyanate | 2.25 | 3.21 | 3.21 | 3.21 | 3.21 | 3.21 |
| Carbodiimide | 0.00 | 0.10 | 0.17 | 0.34 | 0.17 | 0.17 |
| Silane coupling agent | 0.00 | 0.00 | 0.00 | 0.00 | 0.50 | 0.30 |
| EtAc | 10.00 | 11.00 | 11.00 | 11.00 | 11.00 | 11.00 |

**[Table 3]**

| | Comparative Example 7 | Comparative Example 8 | Comparative Example 9 | Comparative Example 10 | Comparative Example 11 |
|---|---|---|---|---|---|
| Polyester-based diol | 14.25 | 14.25 | 13.80 | 14.25 | 14.25 |
| Polycarbonate-based diol | 0.75 | 0.75 | 1.20 | 0.75 | 1.20 |
| Aliphatic isocyanate | 3.21 | 3.21 | 4.50 | 4.50 | 4.50 |
| Carbodiimide | 0.00 | 0.00 | 0.20 | 0.20 | 0.20 |
| Silane coupling agent | 0.50 | 0.80 | 0.80 | 0.50 | 0.50 |
| EtAc | 11.00 | 11.00 | 11.00 | 11.00 | 11.00 |

The urethane-based adhesive was applied to the surface of the metal layer of the metal-layer laminate with a bar coater in such a manner that as a guide, the dry film thickness of the first adhesive layer was 10 µm. The resulting coating was dried at 60°C for 1 minute, and then the coating was laminated with the metal layer and the polycarbonate layer. The urethane-based adhesive was applied to the surface of the metal layer-holding layer of the metal-layer laminate of this laminated product with a bar coater in such a manner that as a guide, the dry film thickness of the second adhesive layer was 10 µm. The resulting coating was dried at 60°C for 1 minute, and then the coating was laminated with the metal layer-holding layer and the polycarbonate layer. After that, the resulting product was aged at 30°C for 10 days to provide a metallic decorative laminate.

The lamination was performed using a laminator (EXCELAM II-355Q, manufactured by GMP) with the temperature of a pressure roller on the polycarbonate layer side set to 130°C and the sheet feed rate set to 0.3 m/min.

As described above, metallic decorative laminates of Examples 1 to 7 and Comparative Examples 1 to 11 were manufactured. Examples 1 to 7 and Comparative Examples 1 to 11 differ in the formulation of the urethane adhesive, but the other conditions are the same. In Examples 1 to 7 and Comparative Examples 1 to 11, the same polycarbonate layer is used for each of the first polycarbonate layer and the second polycarbonate layer, and there is no difference in the film. The same urethane-based adhesive is used for each of the first adhesive layer and the second adhesive layer, and there is no difference in the adhesive.

### [Manufacturing of Metallic Formed Body]

Using an air-pressure forming machine, the metallic decorative laminate was clamped, and then the metallic decorative laminate was preformed to fit a mold for an injection molded body at a preforming temperature of 200°C and a compressed air pressure of 6 bar. An unnecessary portion that protruded from the mold was then trimmed off to provide a metallic formed body.

### [Manufacturing of Injection Molded Body]

The metallic formed body was inserted into the mold of an injection molding machine. A polycarbonate (Iupilon S-2000R535, manufactured by Mitsubishi Engineering-Plastics Corporation) was injected by insert injection molding to produce an injection molded body having dimensions of 104 mm × 78.5 mm × 9.3 mm, a wall thickness of 3 mm, and a radius of curvature of 5 mm at the angled portions and corner portions. The injection resin temperature for the polycarbonate during injection molding was set to 300°C. Fig. 2 illustrates a front view and side views, each representing the dimensions of the manufactured injection molded body 1000. Fig. 2(A) is a front view of the injection molded body 1000. Fig. 2(B) is a side view of the injection molded body 1000 when viewed from the X-direction of Fig. 2(A). Fig. 2(C) is a side view of the injection molded body 1000 when viewed from the Y-direction of Fig. 2 (A) .

**[Table 4]**

| | | Example 1 | Example 2 | Example 3 | Example 4 |
|---|---|---|---|---|---|
| Film thickness of adhesive layer (µm) | | 10 | 10 | 10 | 10 |
| Appearance evaluation | | A | A | A | A |
| Optical properties | Total light transmittance (%) | 14.5 | 15.1 | 15.7 | 15.7 |
| | Haze (%) | 3.7 | 3.7 | 2.8 | 2.8 |
| Optical properties after hydrolysis | Total light transmittance (%) | 17.8 | 18.3 | 18.3 | 18.3 |
| | Haze (%) | 5.1 | 5.1 | 4.3 | 4.3 |
| Adhesion (N/25 mm) | PU-PC | 26 | 22 | 42 | 43 |
| | PC-In | 31 | 30 | 30 | 31 |
| Adhesion (N/25 mm) after hydrolysis | PU-PC | material destroyed | material destroyed | 45 | 44 |
| | PC-In | material destroyed | material destroyed | 33 | 33 |
| Optical properties of injection molded body | Total light transmittance (%) | 16.4 | 16.4 | 17.1 | 17.1 |
| | Haze (%) | 3.1 | 3.3 | 3.5 | 3.5 |
| Optical properties of injection molded body after hydrolysis | Total light transmittance (%) | 19.4 | 17.4 | 19.2 | 19.2 |
| | Haze (%) | 3.2 | 3.7 | 3.5 | 3.5 |
| Appearance evaluation of injection molded body | | A | A | A | A |
| Washout | | A | A | A | A |

**[Table 5]**

| | | Example 5 | Example 6 | Example 7 |
|---|---|---|---|---|
| Film thickness of adhesive layer (µm) | | 10 | 10 | 10 |
| Appearance evaluation | | A | A | A |
| Optical properties | Total light transmittance (%) | 15.7 | 15.7 | 15.7 |
| | Haze (%) | 2.8 | 2.8 | 2.8 |
| Optical properties after hydrolysis | Total light transmittance (%) | 18.3 | 18.3 | 18.3 |
| | Haze (%) | 4.3 | 5.1 | 4.3 |
| Adhesion (N/25 mm) | PU-PC | 26 | 25 | 42 |
| | PC-In | 31 | 30 | 25 |
| Adhesion (N/25 mm) after hydrolysis | PU-PC | material destroyed | material destroyed | 44 |
| | PC-In | material destroyed | material destroyed | 32 |
| Optical properties of injection molded body | Total light transmittance (%) | 17.1 | 17.1 | 17.1 |
| | Haze (%) | 3.5 | 3.5 | 3.5 |
| Optical properties of injection molded body after hydrolysis | Total light transmittance (%) | 19.2 | 19.2 | 19.2 |
| | Haze (%) | 3.5 | 3.5 | 3.5 |
| Appearance evaluation of injection molded body | | A | A | A |
| Washout | | A | A | A |

**[Table 6]**

| | | Comparative Example 1 | Comparative Example 2 | Comparative Example 3 | Comparative Example 4 | Comparative Example 5 | Comparative Example 6 |
|---|---|---|---|---|---|---|---|
| Film thickness of adhesive layer (µm) | | 10 | 10 | 10 | 10 | 10 | 10 |
| Appearance evaluation | | A | A | A | A | A | A |
| Optical properties | Total light transmittance (%) | 16 | 15.7 | 15.7 | 15.5 | 14.5 | 15.5 |
| | Haze (%) | 3.9 | 3.8 | 2.8 | 2.7 | 3.7 | 2.9 |
| Optical properties after hydrolysis | Total light transmittance (%) | 19.1 | 18.8 | 18.8 | 18.6 | 17.8 | 18.6 |
| | Haze (%) | 5.4 | 5.2 | 4.1 | 4 | 5.1 | 4.3 |
| Adhesion (N/25 mm) | PU-PC | 35 | 40 | 42 | 36 | 35 | 36 |
| | PC-In | 33 | material destroyed | 30 | 27 | 31 | 30 |
| Adhesion (N/25 mm) after hydrolysis | PU-PC | 5 | 2 | 1 | 20 | material destroyed | 10 |
| | PC-In | 1 | 2 | 1 | 17 | material destroyed | 2 |
| Optical properties of injection molded body | Total light transmittance (%) | 15 | 17.1 | 16.3 | 17.1 | 16.4 | 18.4 |
| | Haze (%) | 4.1 | 3.5 | 3.3 | 3.2 | 3.2 | 3.3 |
| Optical properties of injection molded body after hydrolysis | Total light transmittance (%) | 17.7 | 19.2 | 19.2 | 19.8 | 19.4 | 19.5 |
| | Haze (%) | 5.9 | 3.5 | 3.3 | 3.3 | 3.3 | 3.1 |
| Appearance evaluation of injection molded body | | A | A | A | A | A | A |
| Washout | | B | A | A | A | B | A |

**[Table 7]**

| | | Comparative Example 7 | Comparative Example 8 | Comparative Example 9 | Comparative Example 10 | Comparative Example 11 |
|---|---|---|---|---|---|---|
| Film thickness of adhesive layer (µm) | | 10 | 10 | 10 | 10 | 10 |
| Appearance evaluation | | A | A | A | A | A |
| Optical properties | Total light transmittance (%) | 14.7 | 16.3 | 15.7 | 15.7 | 15.7 |
| | Haze (%) | 5.6 | 4.9 | 2.8 | 2.8 | 2.8 |
| Optical properties after hydrolysis | Total light transmittance (%) | 16.7 | 20.1 | 18.3 | 18.3 | 18.3 |
| | Haze (%) | 6 | 7.5 | 5.1 | 4.3 | 4.3 |
| Adhesion (N/25 mm) | PU-PC | 25 | 36 | 42 | 42 | 42 |
| | PC-In | 36 | 36 | 25 | 25 | 25 |
| Adhesion (N/25 mm) after hydrolysis | PU-PC | 6 | 8 | 15 | 15 | 15 |
| | PC-In | 1.6 | 12 | 10 | 10 | 10 |
| Optical properties of injection molded body | Total light transmittance (%) | 10.8 | 11.5 | 17.1 | 17.1 | 17.1 |
| | Haze (%) | 5.6 | 5.7 | 3.5 | 3.5 | 3.5 |
| Optical properties of injection molded body after hydrolysis | Total light transmittance (%) | 12.3 | 12.8 | 19.2 | 19.2 | 19.2 |
| | Haze (%) | 7.4 | 7.3 | 3.5 | 3.5 | 3.5 |
| Appearance evaluation of injection molded body | | A | A | B | B | B |
| Washout | | A | A | A | A | A |

### [Results]

From the results of Examples 1 to 7 presented in Tables 4 and 5, the visual appearance was good, and the design property was satisfied. There were no defects in the formation of the metallic formed body and the injection molded body. No cloudiness or cracks were generated. No washout occurred. The moldability was good. There were no abnormalities in the total light transmittance or haze value before and after the hydrolysis test under conditions that cause problems in existing products, and the adhesion was also good. Regarding adhesion, the results indicated that the adhesion performance was improved after the hydrolysis test.

That is, the structure derived from the polyester-based diol used is contained in an amount of 13.8 parts or more by mass and 14.25 parts or less by mass, the structure derived from the polycarbonate-based diol used is contained in an amount of 0.75 parts or more by mass and 1.2 parts or less by mass, the structure derived from the aliphatic isocyanate used is contained in an amount of 3.2 parts or more by mass and 4.0 parts or less by mass, the structure derived from the carbodiimide used is contained in an amount of 0.08 parts or more by mass and 0.2 parts or less by mass, and the structure derived from the silane coupling agent used is contained in an amount of 0.5 parts or more by mass and 0.8 parts or less by mass. In this case, it was confirmed that it is possible to satisfy the hydrolysis resistance without impairing the design property and the formability, and to improve the poor appearance of the metallic molded article due to a washout.

The results of Comparative Examples 1 to 11 presented in Tables 6 and 7 indicated that a washout occurred when no polycarbonate-based diol was contained (Comparative Examples 1 and 5). The absence of the carbodiimide resulted in deteriorations in optical properties and a reduction in adhesion after the hydrolysis test (Comparative Examples 1, 7, and 8). When the amount of carbodiimide was large, the adhesion after the hydrolysis test was reduced (Comparative Example 4). When the silane coupling agent containing an epoxy group was not contained or was insufficient, the adhesion after the hydrolysis test was reduced (Comparative Examples 1 to 4 and 6). When a large amount of the aliphatic isocyanate was used, cracks or cloudiness were observed at the angled portions and the corner portions of the injection molded body, resulting in poor appearance, and the adhesion after the hydrolysis test was reduced (Comparative Examples 9 to 11).

### [Conclusion]

From the above, it has become clear that the present invention can provide a metallic decorative laminate, a metallic formed body, an injection molded body, a method for manufacturing a metallic decorative laminate, a method for manufacturing a metallic formed body, a method for manufacturing an injection molded body, and a urethane-based adhesive, which can satisfy hydrolysis resistance without impairing the design property and moldability and can improve poor appearance of a metallic molded article due to a washout. Therefore, the present invention has been found to be industrially useful.

### Reference Signs List

- 1: metal-layer laminate
- 2: metallic decorative laminate (A)
- 3: metallic decorative laminate (B)
- 10: first polycarbonate layer
- 20: first adhesive layer
- 30: metal layer
- 40: metal layer-holding layer
- 50: second adhesive layer
- 60: second polycarbonate layer
- 100: thickness direction
- 110: width direction
- 120: longitudinal direction
- 1000: injection molded body
- 1100: injection molded body
- 1110: gate portion
- 1200: injection molded body
- 1210: gate portion
- 1220: washout portion

## Claims

1. A metallic decorative laminate, comprising:
a first polycarbonate layer;
a first adhesive layer;
a metal-layer laminate including a metal layer;
a second adhesive layer; and
a second polycarbonate layer, in that order,
wherein each of the first adhesive layer and the second adhesive layer contains a reaction product of a polyester-based diol, a polycarbonate-based diol, and an aliphatic isocyanate, a carbodiimide, and a silane coupling agent containing an epoxy group, and
wherein each of the first adhesive layer and the second adhesive layer contains a structure derived from the polyester-based diol in an amount of 13.8 parts or more by mass and 14.25 parts or less by mass, a structure derived from the polycarbonate-based diol in an amount of 0.75 parts or more by mass and 1.2 parts or less by mass, a structure derived from the aliphatic isocyanate in an amount of 3.20 parts or more by mass and 4.00 parts or less by mass, a structure derived from the carbodiimide in an amount of 0.08 parts or more by mass and 0.20 parts or less by mass, and a structure derived from the silane coupling agent in an amount of 0.50 parts or more by mass and 0.80 parts or less by mass.

2. The metallic decorative laminate according to claim 1, wherein before and after a hydrolysis test in which the metallic decorative laminate is left to stand for 72 hours under conditions of a temperature of 90°C and a relative humidity of 95% RH,
total light transmittance is 10% or more and 20% or less before and after the hydrolysis test,
haze is 5.5% or less before and after the hydrolysis test, and
peel strength of each of the first adhesive layer and the second adhesive layer, as measured by a 180° peel test based on JIS K 6854-2, is greater than or equal to 20 N/25 mm before and after the hydrolysis test.

3. A metallic formed body, comprising a formed body of the metallic decorative laminate according to claim 1 or 2.

4. An injection molded body, comprising an injection molded resin layer on a surface of the first polycarbonate layer and/or a surface of the second polycarbonate layer of the metallic formed body according to claim 3.

5. A method for manufacturing a metallic decorative laminate according to claim 1 or 2, comprising:
applying a urethane-based adhesive to the first polycarbonate layer and/or the metal-layer laminate, drying the urethane-based adhesive, and then bonding the first polycarbonate layer and the metal-layer laminate with the first adhesive layer interposed therebetween; and
applying a urethane-based adhesive to the metal-layer laminate and/or the second polycarbonate layer, drying the urethane-based adhesive, and then bonding the metal-layer laminate and the second polycarbonate layer with the second adhesive layer interposed therebetween.

6. A method for manufacturing a metallic formed body, comprising a formation step of bringing the metallic decorative laminate according to claim 1 or 2, the metallic decorative laminate having a surface temperature of 150°C or higher and 200°C or lower, into close contact with a mold to thereby provide a formed body of a laminate including a metallic decoration.

7. A method for manufacturing an injection molded body, comprising an injection molding step of, using an injection mold, injecting a resin into a gap between the injection mold and a surface of the first polycarbonate layer and/or a surface of the second polycarbonate layer of the metallic formed body obtained by the method for manufacturing a metallic formed body according to claim 6, to form a resin layer, thereby providing an injection molded body in which the metallic formed body and the resin layer are integrated.

8. A urethane-based adhesive, comprising a polyester-based diol, a polycarbonate-based diol, an aliphatic isocyanate, a carbodiimide, and a silane coupling agent containing an epoxy group, wherein the urethane-based adhesive contains a structure derived from the polyester-based diol in an amount of 13.80 parts or more by mass and 14.25 parts or less by mass, a structure derived from the polycarbonate-based diol in an amount of 0.75 parts or more by mass and 1.20 parts or less by mass, a structure derived from the aliphatic isocyanate in an amount of 3.20 parts or more by mass and 4.00 parts or less by mass, a structure derived from the carbodiimide in an amount of 0.08 parts or more by mass and 0.20 parts or less by mass, and a structure derived from the silane coupling agent in an amount of 0.50 parts or more by mass and 0.80 parts or less by mass.
